(19) Europäisches Patentamt
European Patent Office
Office européen des brevets

(11) EP 2 106 148 A2

## (12) EUROPEAN PATENT APPLICATION

(43) Date of publication:
30.09.2009 Bulletin 2009/40

(51) Int Cl.:
H04N 7/50 (2006.01)    H04N 7/26 (2006.01)

(21) Application number: 09156745.3

(22) Date of filing: 30.03.2009

(84) Designated Contracting States:
AT BE BG CH CY CZ DE DK EE ES FI FR GB GR
HR HU IE IS IT LI LT LU LV MC MK MT NL NO PL
PT RO SE SI SK TR
Designated Extension States:
AL BA RS

(30) Priority: 28.03.2008  KR 20080029291
14.10.2008  KR 20080100754

(71) Applicants:
• Samsung Electronics Co., Ltd.
Yeongtong-gu
Suwon-si, Gyeonggi-do (KR)
• Sungkyunkwan University Foundation for
Corporate
Collaboration
Jangan-gu,
Suwon-si
Gyeonggi-do 440-746 (KR)

(72) Inventors:
• Choi, Kwang-Pyo
Gyeonggi-do (KR)
• Oh, Yun-Je
Gyeonggi-do (KR)
• Joo, Young-Hun
Gyeonggi-do (KR)
• Jeon, Byeung-Woo
Gyeonggi-do (KR)
• Jung, Bong-Soo
Gyeonggi-do (KR)

(74) Representative: Harrison Goddard Foote
106 Micklegate
York
YO1 6JX (GB)

(54) **Method and apparatus for encoding/decoding information about intra-prediction mode of video**

(57)     A method and apparatus for encoding and decoding IPM information are provided, in which a coding unit is received, IPMs of a plurality of sub-units included in the coding unit are determined, a relation between an IPM of each sub-unit and IPMs of neighboring sub-units of the each sub-unit is checked, and information about IPMs of a plurality of sub-units according to the relations is encoded in an integrated manner.

FIG.1

**Description**

**BACKGROUND OF THE INVENTION**

1. Field of the Invention

The present invention generally relates to a method and apparatus for video coding/decoding. More particularly, the present invention relates to a method and apparatus for encoding/decoding information about an intra-prediction mode.

2. Description of the Related Art

Many digital video compression techniques have been proposed to achieve low data rates or reduce storage areas with high video quality during transmission or storage of a video signal. These digital video compression techniques are realized by international standards such as H.261, H.263, H.264, Moving Picture Experts Group-2 (MPEG-2), and MPEG-4. The compression techniques achieve relatively high compression rates by Discrete Cosine Transform (DCT), Motion Compensation (MC), or the like. The video compression techniques find their applications in efficient transmission of video data streams over various digital networks including a portable phone network, a computer network, a cable network, and a satellite network, for example. They are also employed for efficiently storing video data streams in memory media such as a hard disk, an optical disk, and a Digital Video Disk (DVD).

For high video quality, a large amount of data is required to encode a video signal. However, a communication network that delivers video data can limit data rates for encoding. For instance, a data channel in a satellite broadcasting system or a digital cable TV network carries data usually at a Constant Bit Rate (CBR) and the capacity of a storage medium like a disk is limited.

Therefore, a video coding process carries out an appropriate trade-off between video quality and the number of bits required for image compression. Because video coding is a relatively complex process, for example, when video coding is implemented in software, the video coding process needs a relatively large number of Central Processing Unit (CPU) cycles. What is worse, if video coding is performed in real time, temporal restrictions limit coding accuracy, resulting in a limited video quality.

Video coding is critical in a real environment. In this context, video coding methods have been proposed with the aim to reduce process complexity and data rates as much as possible and achieve high image quality.

In H.264/AVC, intra-prediction coding is performed spatially using neighboring pixel values. Decisions as to what neighboring pixels to use is important to improve coding efficiency. To do so, an optimal intra-prediction direction is determined and the values of pixels to be encoded are predicted using neighboring pixel values along the intra-prediction direction. An encoder notifies a decoder of the intra-prediction direction so that the decoder can calculate the predictive values of the pixels for decoding using the neighboring pixels in the same direction.

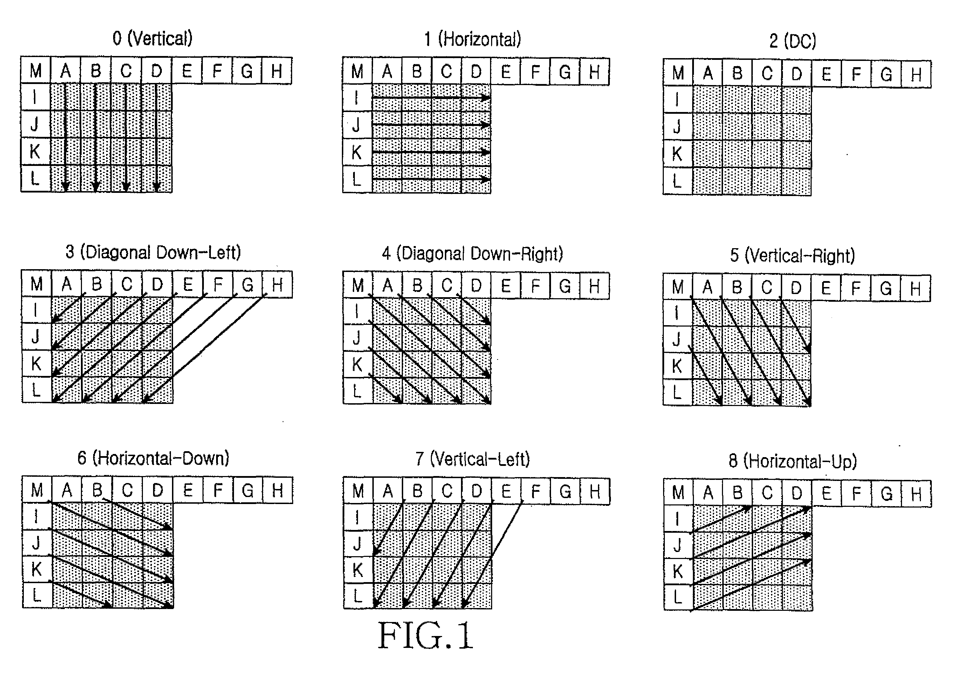

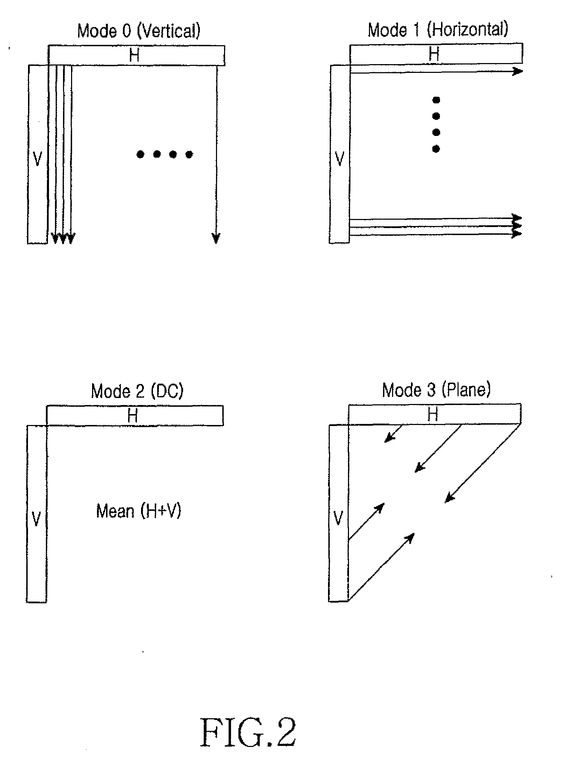

FIG. 1 illustrates H.264 Intra-Prediction Modes (IPMs) for a block of 4x4 pixels and FIG. 2 illustrates H.264 IPMs for a block of 16x16 pixels.

Referring to FIG. 1, H.264 offers nine 4x4 IPMs, Mode 0 (Vertical), Mode 1 (Horizontal), Mode 2 (DC), Mode 3 (Diagonal Down-Left), Mode 4 (Diagonal Down-Right), Mode 5 (Vertical-Right), Mode 6 (Horizontal-Down), Mode 7 (Vertical-Left), and Mode 8 (Horizontal-Up).

In the case of a 4x4 intra-prediction coding, if the IPM of a current block is Mode 1 (Horizontal), the values of pixels I to L to the left of the 4x4 block are used as the predicted values of the 4x4 pixels. That is, the value of the pixel I is used as the predicted values of four pixels in the first row of the 4x4 block, the value of the pixel J is used as the predicted values of four pixels in the second row of the 4x4 block, the value of the pixel K is used as the predicted values of four pixels in the third row of the 4x4 block, and the value of the pixel L is used as the predicted values of four pixels in the fourth row of the 4x4 block. Residual data is acquired by calculating the differences between the predicted values and the pixel values of the current 4x4 block. Then the residual data is encoded and decoded. The video data of the 4x4 block are recovered by combining the decoded residual data with the 4x4 pixels of the current block. The cost between the recovered video data and the video data of the original 4x4 block is calculated. In the same manner, the current 4x4 block is predicted in the nine IPMs and the costs of the 4x4 block are calculated for the nine IPMs. Then an IPM with a minimum cost is selected and information indicating the selected IPM is signaled to a decoder.

Further, in order to increase the coding efficiency of IPM information, information about the IPM of a particular pixel unit (e.g. 4x4 pixel unit) is not simply encoded. Rather, the IPM information is encoded based on the correlation with the IPMs of neighboring pixel units (e.g. 4x4 pixel units).

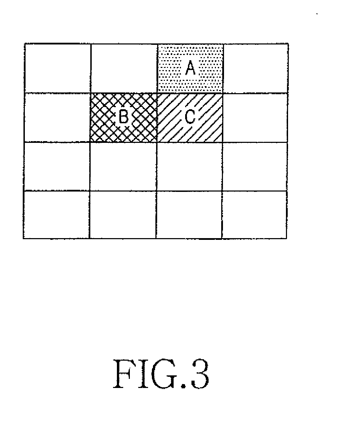

FIG. 3 illustrates exemplary sub-units that are intra-predicted in H.264/AVC. Referring to FIG. 3, a coding unit is a 16x16 macroblock and a sub-unit is a 4x4 pixel unit being an intra-prediction coding unit. Intra-prediction coding is in progress for sub-unit C and sub-units A and B have been already intra-prediction encoded.

An IPM is selected for sub-unit C in the afore-described operation. Then, a most probable mode (*most_probable_mode*) for the neighboring intra-prediction coding units, sub-units A and B is computed by Equation (1):

$$most\_probable\_mod\,e = min\big(best - mod\,e(A), best - mod\,e(B)\big)$$

$$\ldots\ldots(1)$$

where *best - mod e*(A) and *best - mod e*(B) denote the IPM modes of sub-units A and B and *min*( ) denotes a function of selecting the lesser of two mode values.

After the most probable mode is determined, the value of the most probable mode is compared with the value of the IPM of sub-unit C and the comparison result is transmitted. For example, in H.264/AVC, if the value of the most probable mode is equal to that of the IPM of sub-unit C, a 1-bit flag, use_most_probable_mode is set to '1' . If they are different, the flag is set to '0' and a 3-bit fixed-length codeword indicating one of the remaining eight IPMs except the most probable mode is transmitted. Specifically, if the value of the IPM of sub-unit C is greater than that of the most probable mode, the 3-bit fixed-length codeword is set to (the value of the current IPM-1). For instance, if the IPMs of sub-units A, B and C are mode 3, mode 4 and mode 4, respectively, the most probable mode is mode 3. Because the most probable mode is different from the IPM of sub-unit C, use_most_probable_mode is set to '0' and the 3-bit fixed-length codeword is set to '011' representing 3 calculated by subtracting 1 from the value of mode 4, i.e. 4.

As described above, in the case where IPM information about a coding unit (e.g. a macroblock) is encoded in terms of 16 individual 4x4 pixel units of the coding unit, at least 16 bits are required for encoding the 4x4 IPM information even though the IPM of every 4x4 pixel unit is identical to the most probable mode.

## SUMMARY OF THE INVENTION

An aspect of an embodiment of the present invention is to address at least the problems and/or disadvantages described above and to provide at least the advantages described below. Accordingly, an aspect of an embodiment of the present invention is to provide a method and apparatus for encoding/decoding IPM information based on a relationship between a current block and neighboring blocks, to thereby effectively increase compression rate.

In accordance with an aspect of an embodiment of the present invention, there is provided a method for encoding IPM information, in which a coding unit is received, IPMs of a plurality of sub-units included in the coding unit are determined, a relation between an IPM of each sub-unit and IPMs of neighboring sub-units of each sub-unit is checked, and information about IPMs of a plurality of sub-units according to the relations is encoded in an integrated manner.

For the relation checking, the IPMs of each sub-unit and the neighboring sub-units of each sub-unit can be checked, a Representative Intra Mode (RIM) of each sub-unit can be determined using the IPMs of the neighboring sub-units of each sub-unit, and it is determined whether the IPM and RIM of each sub-unit are identical. Information about the IPMs of sub-units with the same IPM and RIM pairs can be encoded in the integrated manner.

Patterns each being a distribution of sub-units having the same IPM and RIM pairs can be preset and information indicating a pattern corresponding to a distribution of the sub-units with the same IPM and RIM pairs can be encoded.

It is preferred that if all of the sub-units included in the coding unit have the same IPM and RIM pairs, information indicating a pattern corresponding to a distribution of all the sub-units with the same IPM and RIM pairs is encoded.

It is preferred that if part of the sub-units included in the coding unit have same IPM and RIM pairs, information indicating a pattern corresponding to a distribution of part of the sub-units having the same IPM and RIM pairs is encoded and information indicating the IPMs of sub-units not having the same IPM and RIM pairs is encoded.

It is preferred that if none of the sub-units included in the coding unit have same IPM and RIM pairs, information indicating a pattern corresponding to none of the sub-units having the same IPM and RIM pairs is encoded and information indicating the IPMs of the sub-units included in the coding unit is encoded.

The RIM of the each sub-unit can be an IPM with a smaller value between the IPMs of the neighboring sub-units of the each sub-unit.

According to another aspect of an embodiment of the present invention, there is provided an apparatus for encoding IPM information, in which an IPM decider determines IPMs of a plurality of sub-units included in a coding unit and checks a relation between an IPM of each sub-unit and IPMs of neighboring sub-units of each sub-unit, a pattern analyzer determines a pattern formed according to the relations, and an Intra-Predictive Mode Integration Pattern (IMIP) encoder encodes at least one of information indicating the pattern and information about IPMs of sub-units.

The IPM decider checks the IPMs of each sub-unit and the neighboring sub-units of each sub-unit, determines a RIM of each sub-unit using the IPMs of the neighboring sub-units of each sub-unit, and determines whether the IPM and RIM of each sub-unit are identical.

The pattern analyzer presets patterns each being a distribution of sub-units having the same IPM and RIM pairs, determines a pattern corresponding to a distribution of sub-units with the same IPM and RIM pairs in the coding unit, and notifies the IMIP encoder of the determined pattern.

It is preferred that if all of the sub-units included in the coding unit have the same IPM and RIM pairs, the IMIP encoder encoders information indicating a pattern corresponding to a distribution of all the sub-units with the same IPM and RIM pairs.

It is preferred that if part of the sub-units included in the coding unit have same IPM and RIM pairs, the IMIP encoder encodes information indicating a pattern corresponding to a distribution of part of the sub-units having the same IPM and RIM pairs and encodes information indicating the IPMs of sub-units not having the same IPM and RIM pairs.

It is preferred that if none of the sub-units included in the coding unit have same IPM and RIM pairs, the IMIP encoder encodes information indicating a pattern corresponding to none of the sub-units having the same IPM and RIM pairs and encodes information indicating the IPMs of the sub-units included in the coding unit.

In accordance with a further aspect of an embodiment of the present invention, there is provided a method for decoding encoded IPM information, in which an encoded bit stream is received, information indicating an IMIP is decoded from the bit stream, and IPMs of sub-units for IPM information was encoded in an integrated manner and/or IPMs of sub-units for IPM information was not encoded in the integrated manner are determined according to the IMIP information.

If the IMIP information indicates that IPM information about all of sub-units included in a coding unit was encoded in the integrated manner, RIMs of the sub-units included in the coding unit can be determined and set as the IPMs of the sub-units.

If the IMIP information indicates that IPM information about part of sub-units included in a coding unit was encoded in the integrated manner, RIMs of the sub-units for which IPM information was encoded in the integrated manner can be determined and set as the IPMs of the sub-units, and the IPMs of sub-units for IPM information was not encoded in the integrated manner can be determined.

If the IMIP information indicates that IPM information about none of sub-units included in a coding unit was encoded in the integrated manner, the IPMs of the sub-units included in the coding unit can be determined, on a one by one basis.

In accordance with still another aspect of an embodiment of the present invention, there is provided an apparatus for decoding encoded IPM information, in which a demultiplexer receives an encoded bit stream and extracting information indicating an IMIP from the bit stream, and an intra decoder determines IPMs of sub-units for IPM information was encoded in an integrated manner and selectively determines IPMs of sub-units for IPM information was not encoded in the integrated manner according to the IMIP information.

If the IMIP information indicates that IPM information about all of sub-units included in a coding unit was encoded in the integrated manner, the intra decoder determines RIMs of the sub-units included in the coding unit and sets the RIMs of the sub-units as the IPMs of the sub-units.

If the IMIP information indicates that IPM information about part of sub-units included in a coding unit was encoded in the integrated manner, the intra decoder determines RIMs of the sub-units for which IPM information was encoded in the integrated manner, sets the RIMs of the sub-units as the IPMs of the sub-units, and determines the IPMs of sub-units for IPM information was not encoded in the integrated manner.

If the IMIP information indicates that IPM information about none of sub-units included in a coding unit was encoded in the integrated manner, the intra decoder determines the IPMs of the sub-units included in the coding unit, on a one by one basis.

## BRIEF DESCRIPTION OF THE DRAWINGS

The above and other objects, features and advantages of certain embodiments of the present invention will be more apparent from the following detailed description taken in conjunction with the accompanying drawings, in which:

FIG. 1 illustrates 4x4 IPMs in H.264;
FIG. 2 illustrates 16x16 IPMs in H.264;
FIG. 3 illustrates exemplary sub-units that are intra-predicted in H.264/AVC;
FIG. 4 is a block diagram of an intra-prediction video coding apparatus according to an embodiment of the present invention;
FIG. 5 is a detailed block diagram of an intra predictor according to an embodiment of the present invention;
FIG. 6A illustrates IPMs for a coding unit according to an embodiment of the present invention;
FIG. 6B illustrates Representative Intra Modes (RIMs) for a coding unit according to an embodiment of the present invention;
FIG. 7 illustrates a first pattern according to an embodiment of the present invention;
FIG. 8A illustrates a second pattern according to an embodiment of the present invention;

FIG. 8B illustrates a third pattern according to an embodiment of the present invention;

FIG. 9A illustrates a fourth pattern according to an embodiment of the present invention;

FIG. 9B illustrates a fifth pattern according to an embodiment of the present invention;

FIG. 10A illustrates a sixth pattern according to an embodiment of the present invention;

FIG. 10B illustrates a seventh pattern according to an embodiment of the present invention;

FIG. 10C illustrates an eighth pattern according to an embodiment of the present invention;

FIG. 10D illustrates a ninth pattern according to an embodiment of the present invention;

FIG. 11 is a flowchart illustrating an IPM information coding method according to an embodiment of the present invention;

FIG. 12 is a block diagram of an intra-prediction video decoding apparatus according to an embodiment of the present invention; and

FIG. 13 is a flowchart illustrating an IPM information decoding method according to an embodiment of the present invention.

Throughout the drawings, the same drawing reference numerals will be understood to refer to the same elements, features and structures.

## DETAILED DESCRIPTION OF EXEMPLARY EMBODIMENTS

The matters defined in the description such as a detailed construction and elements are provided to assist in a comprehensive understanding of embodiments of the invention. Accordingly, those of ordinary skill in the art will recognize that various changes and modifications of the embodiments described herein can be made without departing from the scope and spirit of the invention. Also, descriptions of well-known functions and constructions are omitted for clarity and conciseness.

The following description is made with the appreciation that an IPM information coding method and apparatus according to embodiments of the present invention comply with H.264/AVC, by way of example. Therefore, a coding unit according to the embodiments of the present invention is a macroblock being an H.264/AVC coding unit for encoding the pixels of a picture.

In accordance with the embodiments of the present invention, a coding unit (e.g. macroblock) is divided into a plurality of sub-units and IPM decision is made on a sub-unit for sub-unit basis. Further, the sub-unit can be a block of 8x8, 4x4, or 2x2 pixels according to the H.264/AVC standard.

While the IPM information coding and decoding method of the present invention is based on H.264/AVC, uses a macroblock as a coding unit, and forms a sub-unit with 8x8, 4x or 2x2 pixels, to which the present invention is not limited, it is to be clearly understood that the present invention is applicable for any other video coding and decoding.

A picture for which encoding is in process is referred to as a Current Picture (CP) and a macroblock for which encoding is in process is referred to as a Current MacroBlock (CMB). A sub-unit for which IPM information coding is in process is referred to as a Current Sub-block (CS) and an IPM determined based on the IPMs of neighboring coding units (or sub-units) is referred to as a Representative Intra Mode (RIM).

A substantial correlation may exist between the IPMs of the sub-units of a coding unit. Based on the correlation, the IPM information coding method of the present invention integrally encodes sub-units, if IPM information about the sub-units can be encoded in an integrated manner. For instance, a pattern of sub-units of which the IPM information can be encoded in an integrated manner is defined based on the correlation and the IPM information is encoded according to the pattern. The sub-unit pattern allowing integrated coding of IPM information is referred to as an Intra Prediction Mode Integration Pattern (IMIP).

The IPM information decoding method of the present invention is **characterized in that** integrally coded information about sub-units (e.g. an IMIP) is checked and IPM information about a coding unit is decoded by applying the checked information to a predetermined condition in accordance with an encoding method.

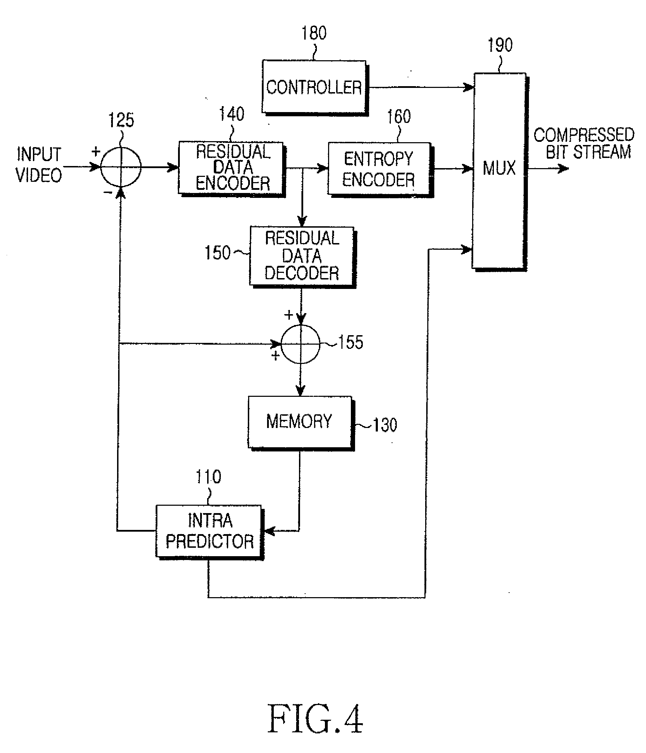

FIG. 4 is a block diagram of an intra-prediction video coding apparatus according to an embodiment of the present invention. Referring to FIG. 4, the intra-prediction video coding apparatus includes an intra predictor 110, a subtractor 125, a memory 130, a residual data encoder 140, a residual data decoder 150, an adder 155, an entropy encoder 160, a controller 180, and a Multiplexer (MUX) 190.

The controller 180 indicates an IPM to the intra predictor 110. The IPM can be one of the IPMs illustrated in FIG. 1. The intra predictor 110 predicts a CS (e.g. an 8x8 or 4x4 block) according to the IPM, referring to previously predicted pixels stored in the memory 130, for example, neighboring pixels above or to the left of the CS and calculates the cost of the IPM for the CS. In this manner, the intra predictor 110 performs intra prediction on the CS in the IPMs illustrated in FIG. 1 and calculates the costs of the respective IPMs. Then the intra predictor 110 selects an IPM with a minimum cost for the CS.

While the controller 180 notifies the intra predictor 110 of IPMs one by one in an embodiment of the present invention, to which the present invention is not limited, it can be further contemplated that upon receipt of a command indicating intra-prediction for a sub-unit from the controller 180, the intra predictor 110 predicts the sub-unit sequentially in the IPMs.

Especially, the intra predictor 110 determines a RIM for the CS based on the IPMs of its neighboring sub-units in an embodiment of the present invention. The RIM is determined based on the correlation between the IPM of the CS and the IPMs of the neighboring sub-units, according to Equation (2):

$$Re\,presentativeIntraMode = f(A,B)$$

$$\ldots\ldots(2)$$

which can be a minimum (min) function for selecting the minimum between two values in an embodiment of the present invention. Yet, the present invention is not limited to the min function and thus the RIM decision function can be a maximum (max) function for selecting the maximum between two values.

The intra predictor 110 compares the IPMs and RIMs of the sub-units of the coding unit, detects a distribution of sub-units with IPMs equal to RIMs, determines whether the sub-unit distribution corresponds to a predetermined IMIP, and selects the IMIP. Then, the intra predictor 110 generates information indicating the selected IMIP.

During intra-prediction coding, the subtractor 125 calculates the differences between the original sub-units and the intra-predicted sub-units (hereinafter, referred to as predicted sub-units) received from the intra predictor 110 and thus outputs residual data.

The residual data encoder 140 transforms the residual data received from the subtractor 120 by a transformation scheme like DCT, quantizes the transformed residual data, and encodes the quantized residual data. The residual data decoder 150 decodes the encoded residual data.

The adder 155 generates recovered units by combining the predicted sub-units received from the intra predictor 110 with the residual data received from the residual data decoder 150.

The entropy encoder 160 entropy-encodes the residual data. The MUX 190 multiplexes the entropy-coded residual data, information indicating the IMIP, information indicating IPMs, and information about the entropy-coded residual data and outputs the resulting bit stream.

The controller 180 provides overall control to each function block. To select an IPM for the CS, the controller 180 controls the operations of the intra predictor 110, the subtractor 125, the memory 130, the residual data encoder 140, the residual data decoder 150, and the adder 155.

The controller 180 controls the intra predictor 110 to generate a plurality of predicted sub-units by predicting each sub-unit in a plurality of IPMs and controls the subtractor 125, the residual data encoder 140, and the residual data decoder 150 to encode and decode residual data between predicted sub-units and original sub-units in the IPMs, and controls the adder 155 and the memory 130 to generate and store recovered sub-units by combining the predicted sub-units with the recovered residual data.

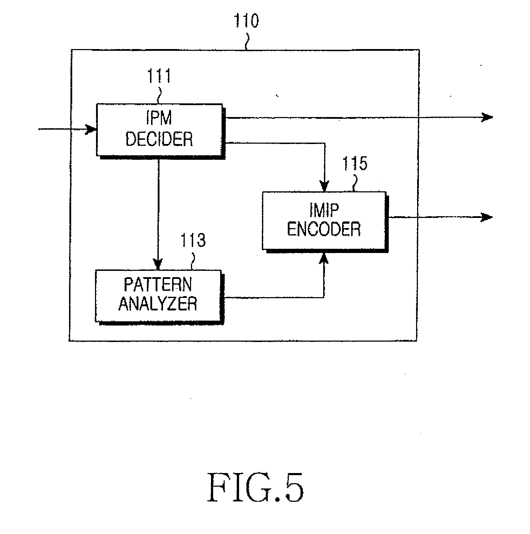

FIG. 5 is a detailed block diagram of the intra predictor according to an embodiment of the present invention. Referring to FIG. 5, the intra predictor 110 includes an IPM decider 111, a pattern analyzer 113, and an IMIP encoder 115.

The IPM decider 111 determines an IPM for a CS. When being notified of each IPM from the controller 180, the IPM decider 111 checks neighboring pixels according to the IPM and generates a predicted sub-unit in the IPM. For instance, the IPM decider 111 generates predicted sub-units according to the plurality of IPMs illustrated in FIG. 1. The IPM decider 111 receives recovered sub-units corresponding to the predicted sub-units, calculates the costs of the recovered units, and checks a recovered sub-unit with a minimum cost. Then the IPM decider 111 selects an IPM that has produced the recovered unit with the minimum cost for the CS.

The IPM decider 111 determines IPMs for the sub-units of a coding unit by repeating the above operation.

The IPM decider 111 determines RIMs for the sub-units based on the IPMs of their neighboring coding units (or sub-units). Preferably, the IPM decider 111 can determine a RIM for the CS by computing Equation (2). The function of Equation (2) can be a min function. That is, the IPM decider 111 can select an IPM with a minimum identification value between the sub-units above and to the left of the CS, as the RIM of the CS.

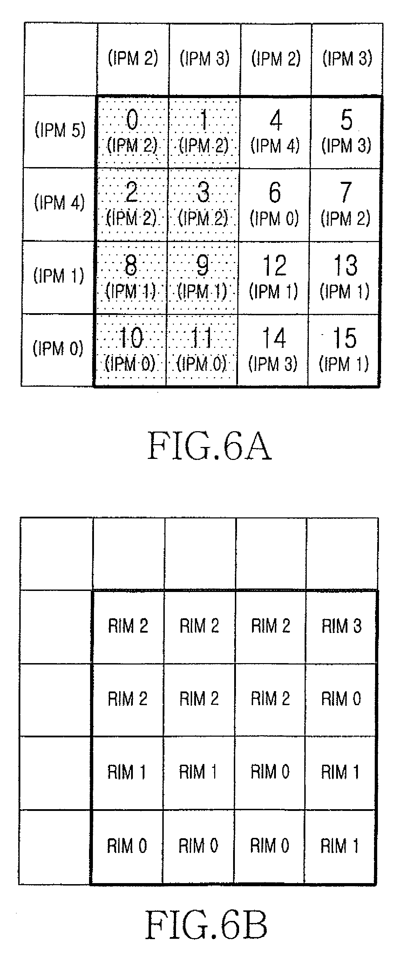

FIG. 6A illustrates IPMs for a coding unit according to an embodiment of the present invention and FIG. 6B illustrates RIMs for the coding unit according to an embodiment of the present invention. In FIG. 6A, numerals on sub-units denote an order of setting IPMs for the sub-units.

The IPM decider 111 determines IPMs for the sub-units of a coding unit as illustrated in FIG. 6A and determines RIMs for the sub-units as illustrated in FIG. 6B. For example, the IPM of sub-unit 7 is IPM2 and its RIM is decided as RIM 0 with the lesser identification value between sub-units 5 and 6 above and to the left of sub-unit 7.

While the RIM setting function is a Minimum (min) function in an embodiment of the present invention, to which the present invention is not limited, the RIM setting function can be a max function.

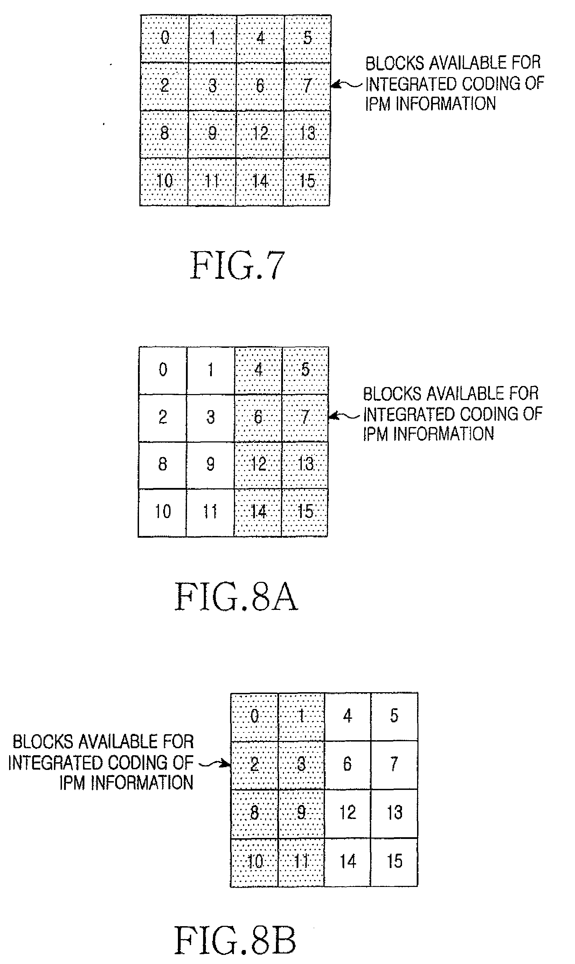

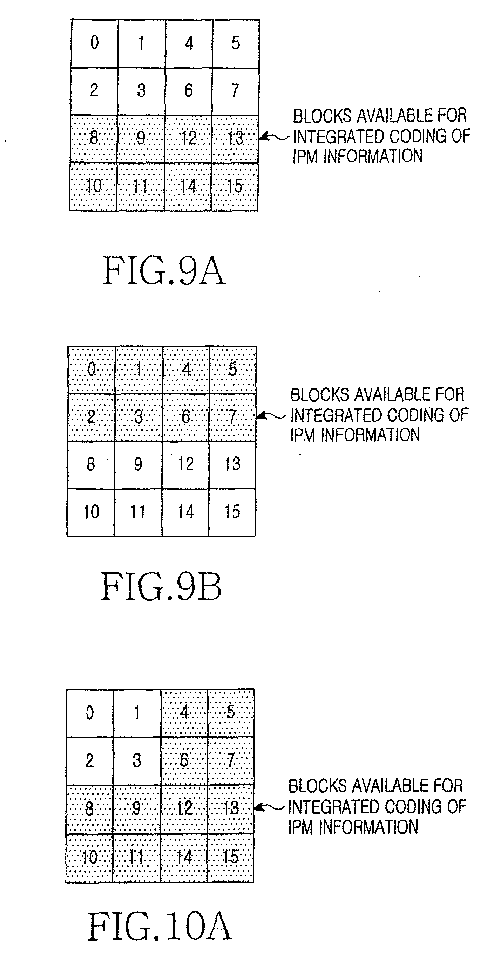

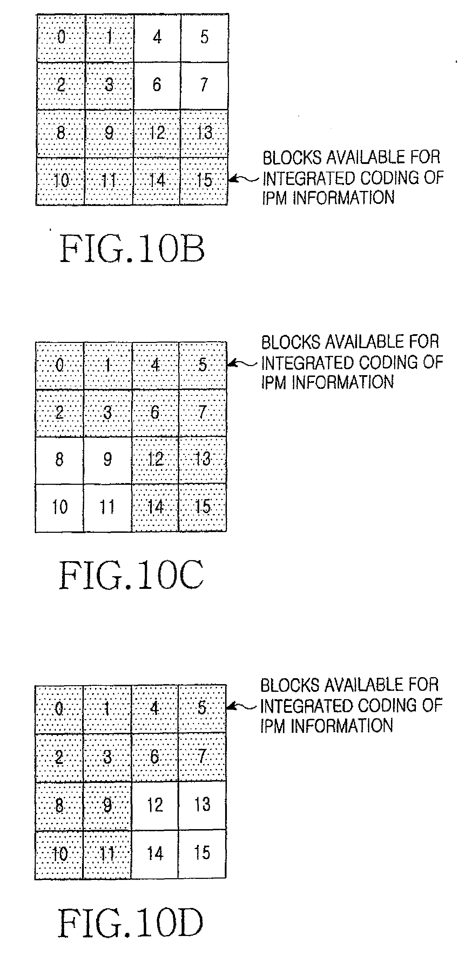

The pattern analyzer 113 pre-defines IMIPs as illustrated in FIGs. 7 to 10. The IMIPs include pattern 1 with all sub-units of a coding unit having the same IPM-RIM pairs as illustrated in FIG. 7, pattern 2 with sub-units having the same IPM-RIM pairs in right 8x16 block areas as illustrated in FIG. 8A, pattern 3 with sub-units having the same IPM-RIM pairs in left 8x16 block areas as illustrated in FIG. 8B, pattern 4 with sub-units having the same IPM-RIM pairs in lower 8x16 block areas as illustrated in FIG. 9A, pattern 5 with sub-units having the same IPM-RIM pairs in upper 8x16 block areas as illustrated in FIG. 9B, pattern 6 with sub-units having the same IPM-RIM pairs in all block areas except upper left 8x8 block areas as illustrated in FIG. 10A, pattern 7 with sub-units having the same IPM-RIM pairs in all block areas except upper right 8x8 block areas as illustrated in FIG. 10B, pattern 8 with sub-units having the same IPM-RIM pairs in all block areas except lower left 8x8 block areas as illustrated in FIG. 10C, pattern 9 with sub-units having the same IPM-RIM pairs in all block areas except lower right 8x8 block areas as illustrated in FIG. 10D, and pattern 10 with no sub-units having the same IPM-RIM pairs.

The pattern analyzer 113 receives information about the IPMs and RIMs of the sub-units of the coding unit from the IPM decider 111, compares the IPMs with the RIMs for the respective sub-units, and checks a distribution of sub-units having the same IPM-RIM pairs. The pattern analyzer 113 then detects an IMIP identical to the sub-unit distribution.

The IMIP encoder 115 receives information indicating the IMIP from the pattern analyzer 113 and encodes the IMIP information. The IMIP encoder 115 selectively encodes information indicating the IPMs of sub-units with pairs of different IPM and RIM in relation to the IMIP.

The above-described intra-prediction video coding apparatus may further include a motion estimator, a motion compensator, and a deblocking filter based on H.264/AVC. The residual data encoder 140 and the residual data decoder 150 may further perform transformation based on DCT and quantization (inverse transformation like inverse DCT and dequantization) for particular pictures (e.g. P or B pictures based on MPEG-2 or H.264 standard. Specifically, Predicted Pictures(P pictures) include macroblocks that may be coded with forward prediction from references made from previous I and P pictures or may be intra coded. Bi-directionally predicted pictures(B Pictures) include macroblocks may be coded with interpolated prediction from past and/or future I or P references)as well as for residual data according to H.264/AVC.

While the intra-prediction video coding apparatus according to an embodiment of the present invention performs DCT as a transformation technique, to which the present invention is not limited, it is obvious that other various transformation techniques can be used.

The intra-prediction video coding apparatus may further perform H.264/AVC-based video coding as well as the IPM information coding of the present invention.

A description will now be made of an IPM information coding method focusing on the controller 180 and the intra predictor 110.

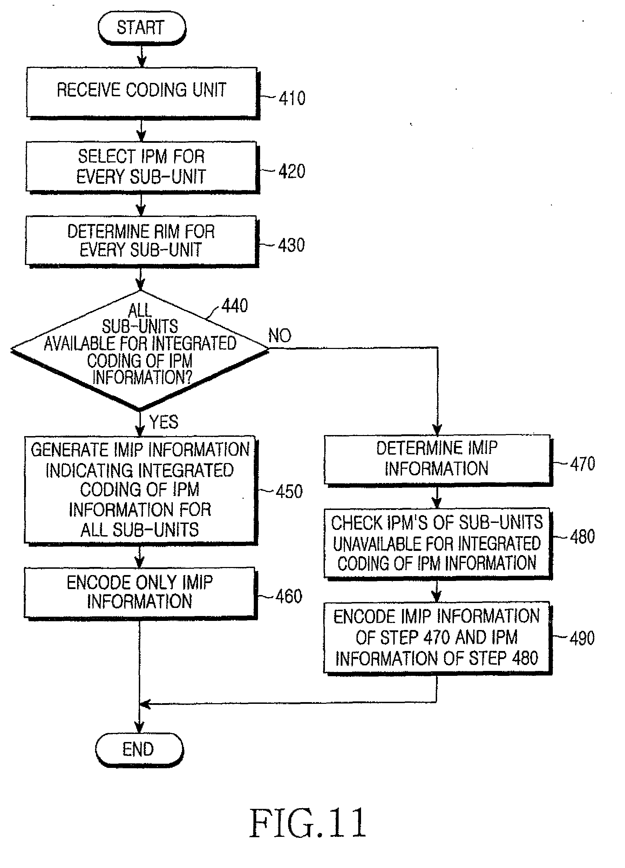

FIG. 11 is a flowchart illustrating an IPM information coding method according to an embodiment of the present invention.

Referring to FIG. 11, a coding unit, for example, a macroblock, is received in step 410. Every sub-unit of the coding unit is predicted and an IPM with a minimum cost is selected for the sub-unit in step 420. The controller 180 sequentially indicates the nine IPMs illustrated in FIG. 1 to the intra predictor 110 and at the same time, commands the intra predictor 110 to operate. In the intra predictor 110, the IPM decider 111 generates predicted sub-units of each sub-unit in the IPMs. As the predicted units are sequentially processed in the subtractor 125, the residual data encoder 140, and the residual data decoder 150, recovered residual data is generated. The adder 155 generates recovered sub-units by combining the predicted sub-units with the recovered residual data. In this manner, recovered sub-units are created for the nine IPMs and stored in the memory 130. The intra predictor 110 calculates costs between the recovered sub-units and original sub-units and selects an IPM with a minimum cost for the sub-unit. In step 420, IPMs are determined for the sub-units of the coding unit by repeating the above operation.

In step 430, a RIM is determined for every sub-unit using the IPMs of neighboring coding units (or sub-units). Preferably, the RIM of a CS is determined by Equation (2). The function of Equation (2) can be a min function.

Step 430 can be performed by the IPM decider 111. The IPM decider 111 checks the IPMs of the sub-units above and to the left of the CS and selects an IPM with the lesser identification value between the IPMs as the RIM of the CS.

Referring back to FIG. 6A, numerals denote an order of setting IPMs for the sub-units of a coding unit. The manner in which a RIM is set for sub-unit 9 of which the IPM is a ninth determined one in the IPM determination order will be described. IPM2 and IPM1 have been selected for sub-unit 3 and sub-unit 8 above and to the left of sub-unit 9, respectively. Therefore, IPM1 having the lesser identification value between the IPMs of the two sub-units 3 and 8 is determined as the RIM of sub-unit 9 as illustrated in FIG. 6B.

Upon receipt of information about the IPMs and RIMs of the sub-units from the IPM decider 111, the pattern analyzer 113 compares the IPMs with the RIMs, and checks a distribution of sub-units having the same IPM-RIM pairs. The pattern analyzer 113 first determines whether the IPM is equal to the RIM for each sub-unit in step 440 and performs steps 450 and 460 if every sub-unit has the same IPM and RIM. That is, the pattern analyzer 113 determines that the sub-unit distribution corresponds to pattern 1 among predetermined IMIPs and notifies the IMIP encoder 115 of pattern 1 in step 450. Then the IMIP encoder 115 encodes only an Identification (ID) indicating pattern 1 as IPM information about the coding unit in step 460.

On the other hand, if at least one sub-unit has different IPM and RIM, IPM information coding is performed in steps 470, 480 and 490.

The pattern analyzer 113 determines which pattern among pattern 2 to pattern 10 corresponds to a distribution of sub-units with the same IPM-RIM pairs in step 470 and checks the IPMs of sub-units that are excluded from integrated IPM information coding according to the determined pattern in step 480.

Then the pattern analyzer 113 provides information indicating the IMIP and information indicating the IPMs of the sub-units excluded from integrated IPM information coding to the IMIP encoder 115. The IMIP encoder 115 encodes the IMIP information and the IPM information in step 490.

Preferably, the IMIP encoder 115 encodes information identifying the IPM of each sub-unit to a fixed length or a variable length as the IPM information.

As described above, in accordance with the IPM information coding method of the present invention, IPM information about sub-units are encoded in an integrated manner, that is, information indicating an IMIP representing a pattern of sub-units with the same IPM-RIM pairs is encoded without the need for encoding information about individual IPMs of a coding unit or some sub-units of the coding unit. In this way, a plurality of IPMs are actually indicated. As a consequence, IPM information about sub-units of a coding unit can be encoded with a minimum number of bits representing the IDs of the IPMs of the coding unit. For pattern 1, only IMIP information is encoded. For pattern 2 to pattern 5, IMIP information and information indicating the IPMs of eight sub-units are encoded. For pattern 6 to pattern 9, IMIP information and information indicating the IPMs of four sub-units are encoded. Hence, the number of bits required for encoding IPM information about a coding unit is remarkably reduced.

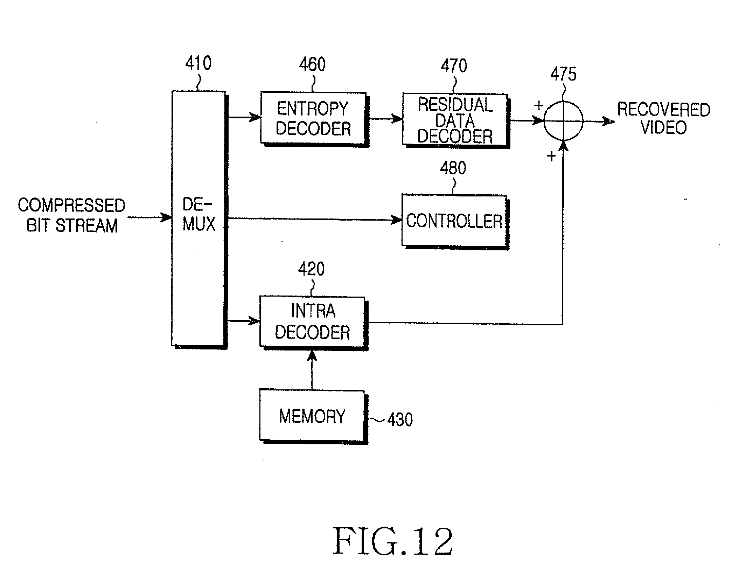

FIG. 12 is a block diagram of an intra-prediction video decoding apparatus according to an embodiment of the present invention. Referring to FIG. 12, the intra-prediction video decoding apparatus includes a Demultiplexer (DEMUX) 410, an intra decoder 420, a memory 430, an entropy decoder 460, a residual data decoder 470, an adder 475, and a controller 480.

The DEMUX 410 parses a coded bit stream and decodes IMIP information, and provides the decoded IMP information to the intra decoder 420. IMIPs are preset between the intra-prediction coding apparatus and the intra-prediction decoding apparatus. If IPM information about all sub-units of a coding unit is encoded in an integrated manner, that is, the IMIP information indicates pattern 1, the DEMUX 410 does not acquire IPM information. On the contrary, if IPM information about a part or none of the sub-units is encoded in an integrated manner, that is, the IMIP information indicates one of pattern 2 to pattern 10, the DEMUX 410 further decodes IPM information and provides the decoded IMIP information and the decoded IPM information to the intra decoder 420. The DEMUX 410 also provides coded residual data to the entropy decoder 460.

The intra decoder 420 determines IPMs for the sub-units of a coding unit based on the IMIP information and generates predicted sub-units for the sub-units using already recovered neighboring pixel values according to the IPMs.

If the IMIP information indicates integrated coding of IPM information about all sub-units of the coding unit, that is, the IMIP information indicates pattern 1, the intra decoder 420 computes the RIMs of the sub-units, referring to already determined IPMs of sub-units neighboring to the sub-units and determines the RIMS of the sub-units as their IPMs. The RIM calculation is performed in the same manner as in the intra-prediction coding apparatus or method. To do so, the RIMs are computed by a predetermined method. For example, the intra-prediction coding method uses Equation (2) for computing RIMs. Therefore, the intra decoder 420 determines the RIMs by Equation (2).

If the IMIP information indicates integrated coding of IPM information about part of the sub-units of the coding unit, that is, the IMIP information indicates one of pattern 2 to pattern 9, the intra decoder 420 checks a distribution of sub-units for which IPM information was encoded in an integrated manner, computes the RIMs of the sub-units, referring to already determined IPMs of sub-units neighboring to the sub-units, and determines the RIMS of the sub-units as their IPMs. Also, the intra decoder 420 determines IPMs for the remaining sub-units for which IPM information was not encoded in the integrated manner by decoding the IPM information received from the DEMUX 410.

If the IMIP information indicates the absence of any sub-unit for which IPM information was encoded in the integrated manner, that is, the IMIP information indicates pattern 10, the intra decoder 420 determines the IPMs of the sub-units by decoding the IPM information received from the DEMUX 410.

The intra decoder 420 generates predicted sub-units for the sub-units using neighboring pixels according to the determined IPMs.

The entropy decoder 460 generates quantized coefficients by entropy-decoding the received residual data. The residual data decoder 470 recovers residual data by de-quantization and inverse transformation of the quantized coefficients.

The adder 475 recovers video information by combining the predicted-sub-unit data generated by the intra decoder 420 with the residual data.

The controller 480 provides overall control to the intra-prediction video decoding apparatus by controlling each function block.

The above-described intra-prediction video decoding apparatus an may further include a motion estimator, a motion compensator, and a deblocking filter based on H.264/AVC. The residual data decoder 470 may further perform inverse transformation like inverse DCT and dequantization for particular pictures (e.g. P or B pictures) as well as for residual data according to H.264/AVC. The intra-prediction video decoding apparatus may further perform H.264/AVC-based video decoding as well as the IPM information decoding of the present invention.

A description will be made below of a video decoding operation by the IPM information decoding method.

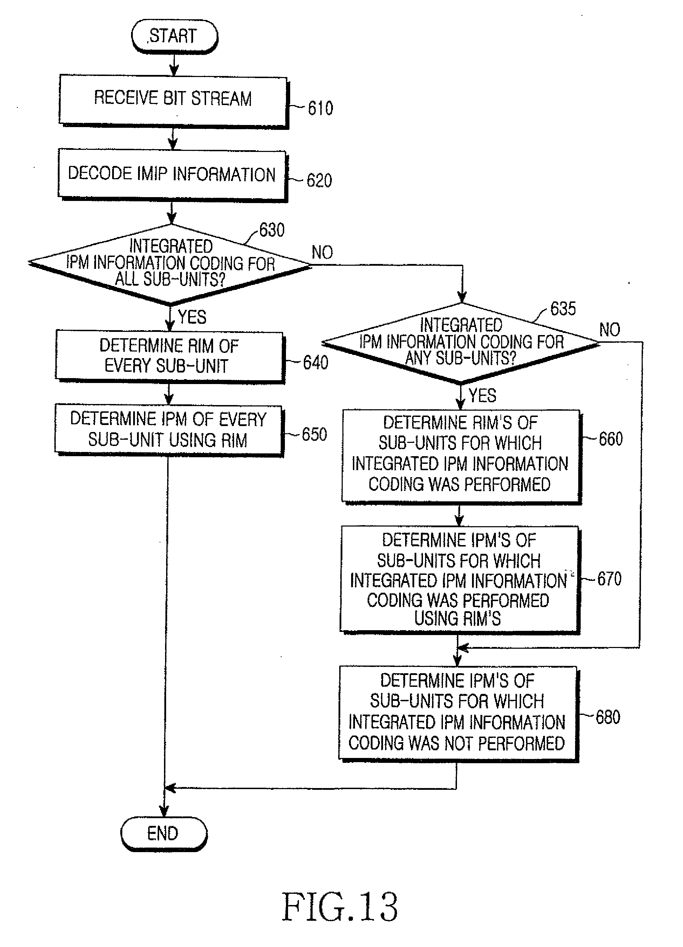

FIG. 13 is a flowchart illustrating an intra-prediction decoding method according to an embodiment of the present invention. Referring to FIG. 13, the DEMUX 410 receives a bit stream in step 610 and decodes IMIP information from the bit stream in step 620. The DEMUX 410 determines from the IMIP information whether IP information about all sub-units of a coding unit was encoded in an integrated manner, that is, the IMIP of the coding unit is pattern 1 in step 630.

In case of pattern 1, IPMs about the sub-units are determined in steps 640 and 650. That is, the DEMUX 410 provides only the IMIP information to the intra decoder 420 and the intra decoder 420 computes the RIMs of the sub-units, referring to already determined IPMs of sub-units neighboring to the sub-units in step 640. The intra decoder 420 determines the RIMs of the sub-units as the IPMs of the sub-units. The RIM computation is performed in the same manner as in the intra-prediction coding apparatus or method. For instance, the RIMs are computed by Equation (2) in step 650.

If IPM information about all of the sub-units of the coding unit was not encoded in the integrated manner in step 630, the DEMUX 410 provides the IMIP information and IPM information indicating the IPMs of sub-units for which IPM information was not encoded in the integrated manner to the intra decoder 420. When the IMIP information indicates that IPM information about part of the sub-units of the coding unit was encoded in the integrated manner, that is, the IMIP information indicates one of pattern 2 to pattern 9 in step 635, the intra decoder 420 determines the IPMs of the sub-units in steps 660, 670 and 680. If the IMIP information indicates the absence of any sub-unit for which IPM information was encoded in the integrated manner, that is, the IMIP information indicates pattern 10 in step 635, steps 660 and 670 are skipped and step 680 is performed.

The intra decoder 420 performs steps 660 and 670. In step 660, the intra decoder 420 checks a distribution of sub-units for which IPM information was encoded in the integrated manner and determined the RIMs of the sub-units, referring to the IPMs of their neighboring sub-units. Then the intra decoder 420 sets the RIMs of the sub-units as their IPMs in step 670.

In step 680, the intra decoder 420 sequentially determines the IPMs of sub-units for which IPM information was not encoded in the integrated manner by decoding the IPM information received from the DEMUX 410.

The determined IPMs of the sub-units are used for intra-prediction of the sub-units.

As is apparent from the above description, information about a pattern of sub-units for which IPMs can be indicated using the IPMs of their neighboring sub-units is encoded for every coding unit without encoding information indicating the individual IPMs of sub-units in the IPM information coding/decoding method and apparatus according to the present invention. Therefore, a stable and excellent compression performance can be achieved, compared to the conventional compression method. Further, the amount of residual data is minimized, relying on the property that a video has high spatial and temporal correlations, thereby effectively increasing a compression rate.

Embodiments of the present invention can also be embodied as computer-readable codes on a computer-readable recording medium. The computer-readable recording medium is any data storage device that can store data which can thereafter be read by a computer system. Examples of the computer-readable recording medium include, but are not limited to, read-only memory (ROM), random-access memory (RAM), CD-ROMs, magnetic tapes, floppy disks, optical data storage devices, and carrier waves (such as data transmission through the Internet via wired or wireless transmission paths). The computer-readable recording medium can also be distributed over network-coupled computer systems so that the computer-readable code is stored and executed in a distributed fashion. Also, function programs, codes, and code segments for accomplishing the present invention can be easily construed as within the scope of the invention by programmers skilled in the art to which the present invention pertains.

While the invention has been shown and described with reference to certain exemplary embodiments of the present invention thereof, it will be understood by those skilled in the art that various changes in form and details may be made therein without departing from the spirit and scope of the present invention as defined by the appended claims and their equivalents.

**Claims**

1.  A method for encoding Intra-Prediction Mode (IPM) information, comprising the staps of:

receiving a coding unit;

determining IPMs of a plurality of sub-units included in the coding unit and checking a relation between an IPM of each sub-unit and IPMs of neighboring sub-units of each sub-unit; and

encoding in an integrated manner information about IPMs of a plurality of sub-units according to the relations.

2. The method of claim 1, wherein the relation checking comprises:

checking the IPMs of the each sub-unit and the neighboring sub-units of each sub-unit;

determining a Representative Intra Mode (RIM) of each sub-unit using the IPMs of the neighboring sub-units of each sub-unit; and

determining whether the IPM and RIM of each sub-unit are identical, and

wherein the IPM information encoding comprises encoding information about the IPMs of sub-units with the same IPM and RIM pairs in the integrated manner.

3. The method of claim 2, further comprising presetting patterns, each pattern being a distribution of sub-units having the same IPM and RIM pairs, and wherein the IPM information encoding comprises encoding information indicating a pattern corresponding to a distribution of the sub-units with the same IPM and RIM pairs.

4. The method of claim 3, wherein if all of the sub-units included in the coding unit have the same IPM and RIM pairs, the IPM information encoding comprises encoding information indicating a pattern corresponding to a distribution of all the sub-units with the same IPM and RIM pairs.

5. The method of claim 3, wherein if part of the sub-units included in the coding unit have same IPM and RIM pairs, the IPM information encoding comprises encoding information indicating a pattern corresponding to a distribution of the part of the sub-units having the same IPM and RIM pairs and encoding information indicating the IPMs of sub-units not having the same IPM and RIM pairs.

6. The method of claim 3, wherein if none of the sub-units included in the coding unit have same IPM and RIM pairs, the IPM information encoding comprises encoding information indicating a pattern corresponding to the sub-units having none of the same IPM and RIM pairs and encoding information indicating the IPMs of the sub-units included in the coding unit.

7. The method of any of claims 2 to 6, wherein the RIM of the each sub-unit is an IPM with a lesser value between the IPMs of the neighboring sub-units of the each sub-unit.

8. An apparatus for encoding Intra-Prediction Mode (IPM) information, comprising:

an IPM decider for determining IPMs of a plurality of sub-units included in a coding unit and checking a relation between an IPM of each sub-unit and IPMs of neighboring sub-units of each sub-unit;

a pattern analyzer for determining a pattern formed according to the relations; and

an Intra Prediction Mode Integration Pattern (IMIP) encoder for encoding at least one of information indicating the pattern and information about IPMs of sub-units.

9. The apparatus of claim 8, wherein the IPM decider checks the IPMs of the each sub-unit and the neighboring sub-units of each sub-unit, determines a Representative Intra Mode (RIM) of each sub-unit using the IPMs of the neighboring sub-units of each sub-unit, and determines whether the IPM and RIM of each sub-unit are identical.

10. The apparatus of claim 8, wherein the pattern analyzer presets patterns, each pattern being a distribution of sub-units having the same IPM and RIM pairs, determines a pattern corresponding to a distribution of sub-units with the same IPM and RIM pairs in the coding unit, and notifies the IMIP encoder of the determined pattern.

11. A method for decoding encoded Intra-Prediction Mode (IPM) information, comprising:

receiving an encoded bit stream;

decoding information indicating an Intra Prediction Mode Integration Pattern (IMIP) from the bit stream; and

determining at least one of IPMs of sub-units for which IPM information was encoded in an integrated manner and IPMs of sub-units for which IPM information was not encoded in the integrated manner according to the IMIP information.

**12.** The method of claim 11, wherein if the IMIP information indicates that IPM information about all of sub-units included in a coding unit were encoded in the integrated manner, the IPM determination comprises:

    determining Representative Intra Modes (RIMs) of the sub-units included in the coding unit; and
    setting the RIMs of the sub-units as the IPMs of the sub-units.

**13.** The method of claim 11, wherein if the IMIP information indicates that IPM information about part of sub-units included in a coding unit were encoded in the integrated manner, the IPM determination comprises:

    determining RIMs of the sub-units for which IPM information was encoded in the integrated manner;
    setting the RIMs of the sub-units as the IPMs of the sub-units; and
    determining the IPMs of sub-units for which IPM information was not encoded in the integrated manner.

**14.** The method of claim 11, wherein if the IMIP information indicates that IPM information about none of sub-units included in a coding unit was encoded in the integrated manner, the IPM determination comprises determining the IPMs of the sub-units included in the coding unit, on a one-by-one basis.

**15.** An apparatus for decoding encoded Intra-Prediction Mode (IPM) information, comprising:

    a demultiplexer for receiving an encoded bit stream and extracting information indicating an Intra Prediction Mode Integration Pattern (IMIP) from the bit stream; and
    an intra decoder for determining if IPMs of sub-units for which IPM information was encoded in an integrated manner and selectively determining IPMs of sub-units for which IPM information was not encoded in the integrated manner according to the IMIP information.

FIG.1

EP 2 106 148 A2

Mode 0 (Vertical)

Mode 1 (Horizontal)

Mode 2 (DC)

Mean (H+V)

Mode 3 (Plane)

# FIG.2

# FIG.3

FIG.4

110

111

IPM
DECIDER

115

IMIP
ENCODER

113

PATTERN
ANALYZER

FIG.5

|  | (IPM 2) | (IPM 3) | (IPM 2) | (IPM 3) |
|---|---|---|---|---|
| (IPM 5) | 0 (IPM 2) | 1 (IPM 2) | 4 (IPM 4) | 5 (IPM 3) |
| (IPM 4) | 2 (IPM 2) | 3 (IPM 2) | 6 (IPM 0) | 7 (IPM 2) |
| (IPM 1) | 8 (IPM 1) | 9 (IPM 1) | 12 (IPM 1) | 13 (IPM 1) |
| (IPM 0) | 10 (IPM 0) | 11 (IPM 0) | 14 (IPM 3) | 15 (IPM 1) |

# FIG.6A

|  |  |  |  |  |
|---|---|---|---|---|
|  | RIM 2 | RIM 2 | RIM 2 | RIM 3 |
|  | RIM 2 | RIM 2 | RIM 2 | RIM 0 |
|  | RIM 1 | RIM 1 | RIM 0 | RIM 1 |
|  | RIM 0 | RIM 0 | RIM 0 | RIM 1 |

# FIG.6B

| 0 | 1 | 4 | 5 |
| 2 | 3 | 6 | 7 |
| 8 | 9 | 12 | 13 |
| 10 | 11 | 14 | 15 |

BLOCKS AVAILABLE FOR INTEGRATED CODING OF IPM INFORMATION

## FIG.7

| 0 | 1 | 4 | 5 |
| 2 | 3 | 6 | 7 |
| 8 | 9 | 12 | 13 |
| 10 | 11 | 14 | 15 |

BLOCKS AVAILABLE FOR INTEGRATED CODING OF IPM INFORMATION

## FIG.8A

BLOCKS AVAILABLE FOR INTEGRATED CODING OF IPM INFORMATION

| 0 | 1 | 4 | 5 |
| 2 | 3 | 6 | 7 |
| 8 | 9 | 12 | 13 |
| 10 | 11 | 14 | 15 |

## FIG.8B

FIG.9A

FIG.9B

FIG.10A

| 0 | 1 | 4 | 5 |
| 2 | 3 | 6 | 7 |
| 8 | 9 | 12 | 13 |
| 10 | 11 | 14 | 15 |

BLOCKS AVAILABLE FOR
INTEGRATED CODING OF
IPM INFORMATION

# FIG.10B

BLOCKS AVAILABLE FOR
INTEGRATED CODING OF
IPM INFORMATION

| 0 | 1 | 4 | 5 |
| 2 | 3 | 6 | 7 |
| 8 | 9 | 12 | 13 |
| 10 | 11 | 14 | 15 |

# FIG.10C

BLOCKS AVAILABLE FOR
INTEGRATED CODING OF
IPM INFORMATION

| 0 | 1 | 4 | 5 |
| 2 | 3 | 6 | 7 |
| 8 | 9 | 12 | 13 |
| 10 | 11 | 14 | 15 |

# FIG.10D

START

RECEIVE CODING UNIT ~410

SELECT IPM FOR
EVERY SUB-UNIT ~420

DETERMINE RIM FOR
EVERY SUB-UNIT ~430

ALL
SUB-UNITS
AVAILABLE FOR INTEGRATED
CODING OF IPM
INFORMATION? ~440

NO →

DETERMINE IMIP
INFORMATION ~470

CHECK IPM'S OF SUB-UNITS
UNAVAILABLE FOR INTEGRATED
CODING OF IPM INFORMATION ~480

ENCODE IMIP INFORMATION
OF STEP 470 AND IPM
INFORMATION OF STEP 480 ~490

YES

GENERATE IMIP INFORMATION
INDICATING INTEGRATED
CODING OF IPM
INFORMATION FOR
ALL SUB-UNITS ~450

ENCODE ONLY IMIP
INFORMATION ~460

END

FIG.11

FIG.12

EP 2 106 148 A2

START

RECEIVE BIT STREAM — 610

DECODE IMIP INFORMATION — 620

630
INTEGRATED IPM INFORMATION CODING FOR ALL SUB-UNITS? — NO

YES

DETERMINE RIM OF EVERY SUB-UNIT — 640

DETERMINE IPM OF EVERY SUB-UNIT USING RIM — 650

635
INTEGRATED IPM INFORMATION CODING FOR ANY SUB-UNITS? — NO

YES

DETERMINE RIM'S OF SUB-UNITS FOR WHICH INTEGRATED IPM INFORMATION CODING WAS PERFORMED — 660

DETERMINE IPM'S OF SUB-UNITS FOR WHICH INTEGRATED IPM INFORMATION CODING WAS PERFORMED USING RIM'S — 670

DETERMINE IPM'S OF SUB-UNITS FOR WHICH INTEGRATED IPM INFORMATION CODING WAS NOT PERFORMED — 680

END

FIG.13